# EUROPÄISCHE PATENTSCHRIFT

(11) **EP 2 191 722 B1**
(45) Veröffentlichungstag und Bekanntmachung des Hinweises auf die Patenterteilung: **02.05.2012**
(21) Anmeldenummer: 09012241.7
(22) Anmeldetag: 26.09.2009
(51) Int. Cl.: A21C 15/04

(54) **Schneidhilfe**
Cutting aid
Aide à la découpe

(30) Priorität: 28.11.2008 DE 102008059592
(43) Veröffentlichungstag der Anmeldung: 02.06.2010
(73) Patentinhaber: Zenker Backformen GmbH & Co. KG, 91217 Hersbruck (DE)
(72) Erfinder: Fackelmann, Felicitas, 90607 Rückersdorf (DE)
(74) Vertreter: Rau, Albrecht

(56) Entgegenhaltungen:
- DE-A1- 3 408 304
- DE-C- 460 080
- DE-U- 7 501 374
- DE-U1- 20 319 654
- DE-U1- 29 809 903
- DE-U1-202006 019 524
- GB-A- 286 931
- GB-A- 1 170 140
- US-A- 1 734 328
- US-A- 2 883 748
- US-A- 5 676 050

## Beschreibung

Die Erfindung betrifft eine Schneidhilfe zum Erleichtern des Schneidens von Kuchen. Unter Kuchen werden hier insbesondere Blechkuchen, in einer Backform gebackene Kuchen, gefüllte Kuchen, wie Torten, herzhafte Kuchen, wie Zwiebelkuchen, Flammkuchen oder dergleichen, verstanden. Mithilfe der Schneidhilfe können auch Kuchen- bzw. Tortenböden, wie Biscuit-Böden, leicht geschnitten werden, die Bestandteil eines Kuchens sein können bzw. werden können. Vorzugsweise weisen die zu schneidenden Kuchen eine runde oder polygonale Form auf.

Es ist bekannt, einen Tortenboden mittels eines spitzen Messers in mehrere Schichten zu teilen. Hierfür wird das Messer in den Tortenboden bis zu dessen Mitte eingestochen. Anschließend wird der Tortenboden gedreht, bis die gewünschte Schicht abgetrennt ist. Dies erfordert sehr viel Geschick und Übung. Gerade das Herstellen sehr dünner Schichten ist sehr schwierig. Oftmals weisen die Schichten keine konstante Höhe auf, was optisch nicht ansprechend ist.

Der Erfindung liegt daher die Aufgabe zugrunde, eine Schneidhilfe zum Erleichtern des Schneidens von Kuchen bereitzustellen, mit der ein Kuchen unkompliziert, präzise und rationell geschnitten werden kann.

Aus der US 2 883 748 sind Schneidvorrichtungen für Bäckereiprodukte mit einem eine Vielzahl von Schneidklingen tragenden Rahmen und Haltevorrichtungen zum Halten von Bäckereiprodukten bekannt. Die Haltevorrichtungen weisen jeweils horizontale Schneidschlitze zum Schneiden des Bäckereiprodukts mit den Schneidklingen auf. Mit den Haltevorrichtungen ist kein sicheres Halten des zu schneidenden Bäckereiprodukts möglich, was ein präzises Schneiden desselben unmöglich macht und zu Verletzungen des Benutzers der Haltevorrichtung führen kann.

Aus der US 1 734 328 ist eine Kuchen-Ringform bekannt. Die Kuchen-Ringform hat einen Ringsteg, an dem an einem ersten Ende eine Schwenklasche mit Arretierausnehmungen angelenkt ist. Im geschlossenen Zustand der Kuchen-Ringform befindet sich die Schwenklasche in einer unteren Stellung, wobei dann ein an dem zweiten Ende des Ringstegs angebrachter Arretierzapfen in eine der Arretierausnehmungen eingreift. Durch die Arretierausnehmungen sind Kuchen in verschiedenen Größen herstellbar.

Die DE 298 09 903 U1 offenbart einen Torten- und Backring. Der Ring hat an einem Ende einen Griffplättchen-Bügel, der einen Arretiervorsprung aufweist. Ferner sind in dem Ring mehrere Vertiefungen ausgebildet, die beabstandet zu dem Griffplättchen-Bügel angeordnet sind. Durch Einführen des Arretiervorsprungs in eine entsprechende Vertiefung ist der Durchmesser des Rings einstellbar.

Eine aus der DE 20 2006 019 524 U1 bekannte Schneidhilfe umfasst einen hohlen Aufnahmezylinder, in dem ein Führungsschlitz zur Führung eines Messers ausgebildet ist.

Aus der GB 286 931 ist eine Schneidhilfe bekannt, die zwei Haltebacken umfasst. In jeder Haltebacke sind mehrere, parallel zueinander verlaufende Führungsöffnungen ausgebildet. Die Haltebacken sind aufeinander zu und voneinander weg verschiebbar, so dass Gegenstände mit verschiedenen Größen zum Schneiden aufgenommen bzw. gehalten werden können.

Die GB 1 170 140 offenbart eine Schneidhilfe, die eine im Wesentlichen kreisringförmig verlaufende Wand mit Führungsöffnungen aufweist. An den Enden der Wand sind Fingeraufnahmen vorgesehen, die ein Halten und Zusammendrücken der Schneidhilfe im Bereich derselben ermöglichen.

Diese Aufgabe wird erfindungsgemäß durch die in dem Anspruch 1 angegebenen Merkmale gelöst. Der Kern der Erfindung liegt darin, dass ein ringförmiger Körper mindestens eine Führungs-Öffnung zur Führung eines Schneidgeräts zum Schneiden bzw. Durchtrennen eines aufgenommenen Kuchens aufweist. Durch den Kontakt zwischen der Innenwand des Ring-Körpers und dem Rand des Kuchens kann eine Relativ-Bewegung zwischen dem Kuchen und der Schneidhilfe unterbunden werden. Ein Schneidgerät kann ein Schneidmesser, ein reißfester Faden oder eine Trennplatte sein.

Weitere vorteilhafte Ausgestaltungen der Erfindung sind in den Unteransprüchen angegeben.

Nachfolgend werden unter Bezugnahme auf die beigefügte Zeichnung bevorzugte Ausführungsformen beschrieben. Dabei zeigen:
- Fig. 1: eine perspektivische Ansicht einer nicht-erfindungsgemäßen Schneidhilfe gemäß einer ersten Ausführungsform von einer ersten Richtung,
- Fig. 2: eine perspektivische Ansicht der in der Fig. 1 dargestellten Schneidhilfe von einer zweiten Richtung, die in etwa um 90° versetzt zu der ersten Richtung ist,
- Fig. 3: eine perspektivische Ansicht einer nicht-erfindungsgemäßen Schneidhilfe gemäß einer zweiten Ausführungsform, und
- Fig. 4: eine perspektivische Ansicht einer erfindungsgemäßen Schneidhilfe gemäß einer dritten Ausführungsform.

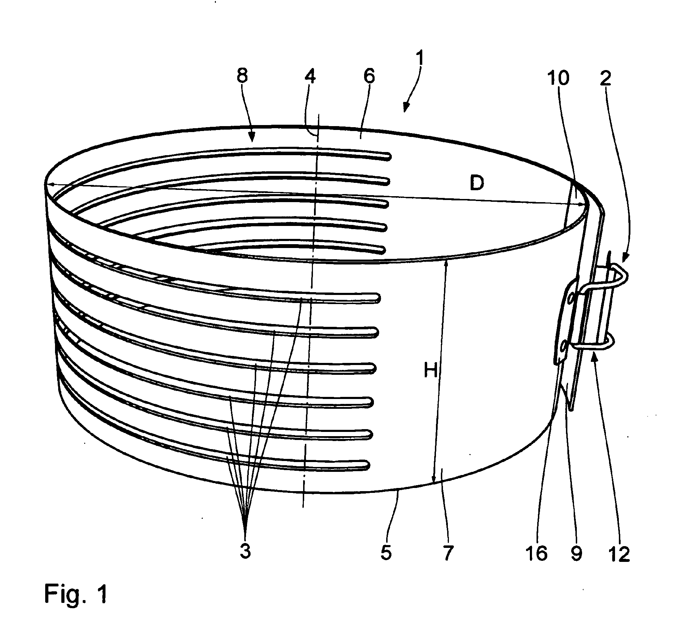

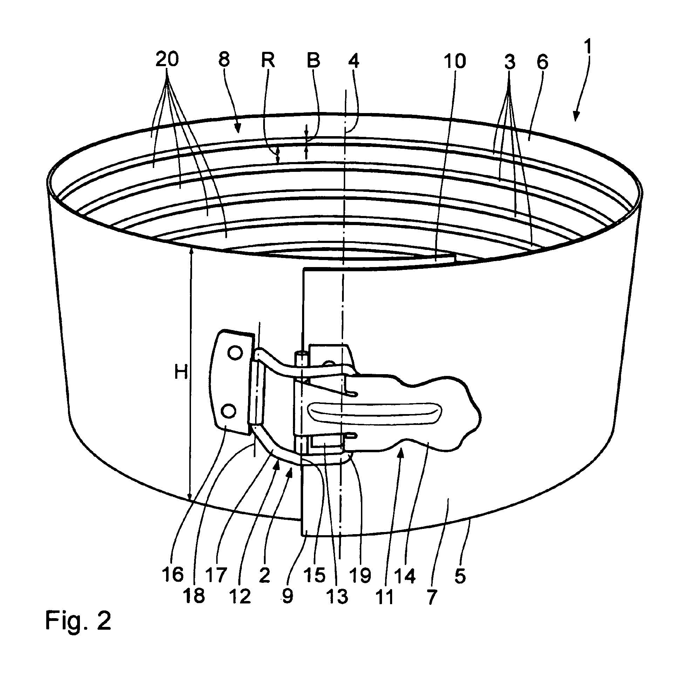

Bezugnehmend auf die Fig. 1 und 2 umfasst eine Schneidhilfe gemäß der ersten Ausführungsform einen Ring-Körper 1 und einen Spann-Verschluss 2 zum Verschließen bzw. Verspannen des Ring-Körpers 1. In dem Ring-Körper 1 kann innen ein Kuchen (nicht dargestellt) aufgenommen werden, um diesen zu schneiden bzw. zu durchtrennen. Hierfür ist in dem Ring-Körper 1 mindestens eine Führungs-Öffnung 3 für die Führung eines Schneidgeräts vorgesehen.

Nachfolgend wird die Schneidhilfe detaillierter unter Bezugnahme auf ihren bestimmungsgemäßen Gebrauch beschrieben. Der Ring-Körper 1 weist im Wesentlichen die Form eines unten und oben offenen, dünnwandigen Zylindermantels bzw. Hohlzylinders auf. Der Ring-Körper 1 ist aus einem Metallblech gebildet. Er ist aus einem gebogenen Streifen aus Edelstahlblech gebildet, der verspannbar bzw. etwas flexibel ist. Der Ring-Körper 1 hat eine Mittel-Längs-Achse 4, die sich im Zentrum des Ring-Körpers 1 vertikal erstreckt. Unten weist der Ring-Körper 1 einen geraden Fuß-Rand 5 auf, der eine ebene Standfläche zum Hinstellen des Ring-Körpers 1 auf eine andere Fläche bildet bzw. eine Stand-Ebene aufspannt. Beispielsweise kann der Ring-Körper 1 mit seinem Fuß-Rand 5 auf einen Tisch, eine Unterlage, eine Kuchen- bzw. Tortenplatte oder dergleichen gestellt werden.

Der Ring-Körper 1 hat eine konstante, vertikale Höhe H, die in Richtung der Mittel-Längs-Achse 4 orientiert ist. Die Höhe H reicht von 3 cm bis 20 cm, vorzugsweise von 5 cm bis 10 cm. Der Ring-Körper 1 weist einen konstanten Durchmesser D auf, der zwischen 15 cm und 35 cm, vorzugsweise zwischen 20 cm und 30 cm, liegt. Er hat ferner eine Innenwand 6 und eine der Innenwand 6 gegenüberliegende Außenwand 7. Die Innenwand 6 ist der Mittel-Längs-Achse 4 zugewandt, während die Außenwand 7 der Mittel-Längs-Achse 4 abgewandt ist. Durch die Innenwand 6 wird ein Kuchen-Aufnahmeraum 8 radial bzw. nach seitlich außen begrenzt, der im Wesentlichen zylinderförmig ist. In dem Kuchen-Aufnahmeraum 8 kann ein zu schneidender Kuchen aufgenommen werden.

Der Ring-Körper 1 weist ein erstes Spann-Ende 9 und ein zweites Spann-Ende 10 auf, die bei geschlossenem Ring-Körper 1 im Wesentlichen benachbart zueinander verlaufen. Die beiden Spann-Enden 9, 10 sind überlappend angeordnet. Unter den Spann-Enden 9, 10 werden hier Bereiche verstanden, die sich an die beiden abschließenden, vertikalen Kanten des Ring-Körpers 1 anschließen. Das erste Spann-Ende 9 verläuft dabei außen, während das zweite Spann-Ende 10 innen verläuft. An den Spann-Enden 9, 10 ist außen der Spann-Verschluss 2 befestigt, der im Wesentlichen aus zwei Teilen 11, 12 gebildet ist. Das dem ersten Spann-Ende 9 zugeordnete Teil 11 umfasst ein an dem Spann-Ende 9 angebrachtes Befestigungs-Element 13. Das Befestigungs-Element 13 ist dabei als Beschlag ausgebildet, der außen an dem Spann-Ende 9 angenietet ist. Ferner umfasst das Teil 11 einen Spann-Hebel 14, der mit seinem Fuß schwenkbar an dem Befestigungs-Element 13 gelagert ist. Der Spann-Hebel 14 ist um eine vertikale Schwenk-Achse 15 verschwenkbar, die sich parallel zu der Mittel-Längs-Achse 4 erstreckt. Am Spann-Hebel 14 ist beabstandet zu dessen Fuß eine innere Aufnahme vorgesehen. Ferner hat der Spann-Hebel 14 einen Betätigungs-Abschnitt, um diesen per Hand zu betätigen.

Das an dem zweiten Spann-Ende 10 befestigte Teil 12 umfasst ein Befestigungs-Element 16, das wieder als Beschlag ausgestaltet ist und außen an dem Spann-Ende 10 angenietet ist. An dem Befestigungs-Element 16 ist ein Spann-Bügel 17 schwenkbar gelagert. Der Spann-Bügel 17, der auch Bestandteil des Teils 12 ist, ist um eine vertikale Schwenk-Achse 18 verschwenkbar, die parallel zu der Schwenk-Achse 15 des Spann-Hebels 14 verläuft.

Zum Schließen bzw. Verspannen des Ring-Körpers 1 ist das freie Ende 19 des Spann-Bügels 17 in die Aufnahme des Spann-Hebels 14 einzuführen. Wenn dann der Spann-Hebel 14 zu der Außenwand 7 des Spann-Endes 9 verschwenkt wird, wird der Ring-Körper 1 über den Spann-Bügel 17 und das Befestigungs-Element 16 zusammengezogen und somit verspannt. Beim Öffnen des Spann-Verschlusses 2 erweitert sich der Ring-Körper 1 dagegen wieder.

In dem Ring-Körper 1 sind mehrere ausgestanzte Führungs-Öffnungen 3 vorgesehen, die den Ring-Körper 1 vollständig durchdringen und so eine Verbindung zwischen der Innenwand 6 und der Außenwand 7 herstellen. Sie sind identisch ausgebildet und weisen jeweils die Form eines Schlitzes auf. Die übereinander angeordneten Führungs-Öffnungen 3 verlaufen parallel zu dem Fuß-Rand 5 und sind somit horizontal orientiert. Durch die Führungs-Öffnungen 3 werden quasi verschiedene Schnitt-Ebenen vorgegeben, die parallel zu der Stand-Ebene sind. Die Fühnangs-Öffnungen 3 erstrecken sich somit senkrecht zu der Mittel-Längs-Achse 4. Sie weisen jeweils eine konstante Breite B in Richtung der Mittel-Längs-Achse 4 von 6 mm bis 10 mm, vorzugsweise von 8 mm, auf. Benachbart zu einer Führungs-Öffnung 3 befinden sich jeweils zwei Führungs-Stege 20, die jeweils eine konstante Höhe R in Richtung der Mittel-Längs-Achse 4 von 6 mm bis 10 mm, vorzugsweise von 8 mm, haben. Der Abstand der Führungs-Öffnungen 3 ist somit ebenfalls konstant.

Die Führungs-Öffnungen 3 sind in Richtung der Mittel-Längs-Achse 4 vertikal übereinander angeordnet, so dass die Führungs-Öffnungen 3 in verschiedenen Höhen des Ring-Körpers 1 verlaufen. Die Führungs-Öffnungen 3 erstrecken sich in dem Ring-Körper 1 über einen Winkelbereich um die Mittel-Längs-Achse 4, der von 100° bis 350°, vorzugsweise von 150° bis 250°, reicht. Der Teil des Ring-Körpers 1, in dem die Führungs-Öffnungen 3 nicht verlaufen, dient als Halte-Abschnitt für die Führungs-Stege 20. Insgesamt sind hier sechs Führungs-Öffnungen 3 vorgesehen. Bevorzugt sind sechs bis zehn Führungs-Öffnungen 3 vorhanden. Besonders bevorzugt sind acht Führungs-Öffnungen 3.

Beim Einsatz der Schneidhilfe befindet sich der zu schneidende Kuchen in dem Kuchen-Aufnahmeraum 8. Der Ring-Körper 1 umläuft dabei den Kuchen, der bevorzugt eine runde Form hat. Der Ring-Körper 1 ist bei geöffnetem Spann-Verschluss 2 in den Kuchen-Aufnahmeraum 8 des Ring-Körpers 1 einzuführen. Vorzugsweise wird der Ring-Körper 1 ergriffen und von oben so aufgesetzt, dass er um den Kuchen läuft. Der Kuchen kann aber auch umgekehrt von oben in den Kuchen-Aufnahmeraum 8 eingeführt werden. Der Ring-Körper 1 steht dann mit seinem Fuß-Rand 5 sicher auf einer tragenden Fläche, die - wie bereits erwähnt - eine herkömmliche Kuchenplatte sein kann.

Der Spann-Verschluss 2 ist dann durch Betätigung des Spann-Hebels 14 zu verschließen, wodurch der Ring-Körper 1 verspannt und daher in seinem Durchmesser D etwas verkleinert wird. Die Größe des Ring-Körpers 1 ist so gewählt, dass die Innenwand 6 des verspannten Ring-Körpers 1 über einen Winkelbereich von mindestens 180°, vorzugsweise von mindestens 320°, außen an dem vertikalen Seitenrand des Kuchens anliegt. Die Innenwand 6 liegt somit bevorzugt in etwa über dem gesamten Umfang des Kuchens an diesem an. Der Kuchen ist dann in seiner Position in dem Ring-Körper 1 seitlich fixiert, so dass er quer zu der Mittel-Längs-Achse 4 nicht versetzt werden kann.

Ein Schneidgerät kann nun über eine Führungs-Öffnung 3 oder aber auch über mehrere Führungs-Öffnungen 3 von außen über den Seitenrand des Kuchens in den fixierten Kuchen eingeführt werden und entlang der gesamten Führungs-Öffnung/en 3 geführt bewegt werden. Beispielsweise kann die Klinge eines Schneidmessers seitlich bzw. horizontal in den Kuchen eingeführt werden.

Danach ist der Spann-Verschluss 2 wieder zu öffnen und der Ring-Körper 1 ist relativ zu dem Kuchen zu drehen, so dass der Kuchen fertig geschnitten werden kann. Dies ist notwendig, da sich die Führungs-Öffnungen 3 nicht über den gesamten Umfang des Ring-Körpers 1 erstrecken. In Abhängigkeit der durchgeführten Schneid-Vorgänge wird der Kuchen in eine horizontale Schicht bzw. Scheibe oder mehrere horizontale Schichten bzw. Scheiben geschnitten, die aufgrund der Führungs-Öffnungen 3 jeweils eine konstante Dicke bzw. Höhe besitzen.

Es ist möglich, dass der Kuchen im eingespannten Zustand über mehrere Führungs-Öffnungen 3 geschnitten wird. Der Kuchen kann aber auch nur einmal in einer gewünschten Höhe getrennt werden. Hierfür ist eine entsprechende Führungs-Öffnung 3 zum Schneiden des Kuchens zu wählen.

Nachfolgend wird eine zweite nicht erfindungsgemäße Ausführungsform beschrieben. Identische Teile erhalten dieselben Bezugszeichen wie bei der ersten Ausführungsform, auf deren Beschreibung hiermit verwiesen wird. Konstruktiv unterschiedliche, jedoch funktionell gleichartige Teile bekommen dieselben Bezugszeichen mit einem nachgeordneten "a". Verglichen mit der ersten Ausführungsform ist bei der zweiten Ausführungsform der Spann-Verschluss anders. Gemäß der zweiten Ausführungsform ist der Spann-Verschluss 2a derart ausgebildet, dass der Ring-Körper 1 in verschiedenen Größen-Stellungen gehalten werden kann. Hierzu weist der Spann-Verschluss 2a mehrere, vorzugsweise zwei, zueinander beabstandete Aufnahmen für den Spann-Bügel 17a auf.

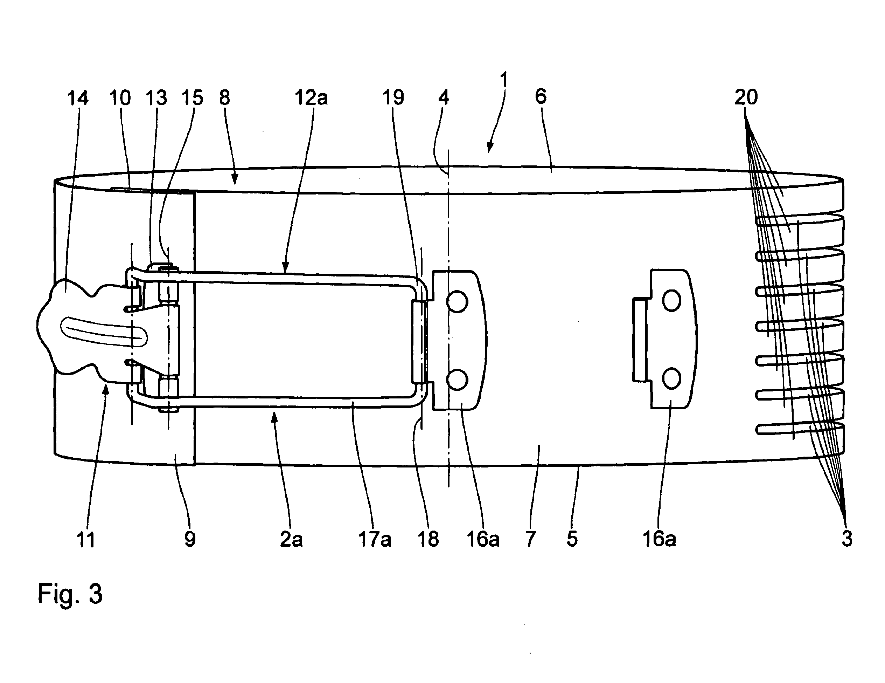

Gemäß Fig. 3 sind zwei getrennte Befestigungs-Elemente 16a an dem zweiten Spann-Ende 10 vorgesehen, die jeweils eine Aufnahme zur Aufnahme bzw. Lagerung des freien Endes 19 des Spann-Bügels 17a aufweisen. Die Aufnahmen bzw. die Befestigungs-Elemente 16a sind in Umfangs-Richtung des Ring-Körpers 1 beabstandet zueinander. Die Aufnahmen sind in Richtung der Mittel-Längs-Achse 4 orientiert. Die Aufnahmen bzw. die Befestigungs-Elemente 16a haben also einen unterschiedlichen Abstand zu dem Spann-Hebel 14. Das freie Ende 19 des Spann-Bügels 17a kann somit in eine der Aufnahmen eingeführt werden. Die Schneidhilfe kann folglich im geschlossenen Zustand des Spann-Verschlusses 2a verschiedene, vorgegebene Durchmesser D aufweisen. Wenn der Spann-Bügel 17a in die von dem Spann-Hebel 14 weiter entfernte Aufnahme eingehängt wird, beträgt der Durchmesser D des Ring-Körpers 1 bei geschlossenem Spann-Verschluss 2a in etwa 26 cm, während der Durchmesser D in etwa 28 cm beträgt, wenn der Spann-Bügel 17a in die näher an dem Spann-Hebel 14 angeordnete Aufnahme eingeführt ist. Es können somit Kuchen mit unterschiedlichen Durchmessern durch den verstellbaren Spann-Verschluss 2a geschnitten werden.

Alternativ sind die beiden getrennten Befestigungs-Elemente 16a einstückig miteinander verbunden, sodass diese eine Einheit bilden. Diese Einheit umfasst wieder mehrere Aufnahmen, die in Umfangs-Richtung des Ring-Körpers 1 zueinander beabstandet sind, um verschieden große Kuchen schneiden zu können. Gemäß einer alternativen Ausführungsform sind an dem Spann-Hebel 14 mehrere innere Aufnahmen vorgesehen, die unterschiedliche Abstände zu dem Fuß des Spann-Hebels 14 haben. Auch hierdurch kann der Ring-Körper 1 im gespannten Zustand verschiedene Durchmesser D aufweisen.

Gemäß einer weiteren nicht erfinderischen Ausführungsform sind anstelle des Spinn-Verschlusses 2, 2a an der Außenwand 7 des Ring-Körpers 1 Halte-Vorsprünge vorgesehen. An jedem Spann-Ende 9, 10 ist ein Halte-Vorsprung angebracht. Die Halte-Vorsprünge sind auf gleicher Höhe des Ring-Körpers 1 angebracht und haben eine Winkelform. Sie sind jeweils mit einem Schenkel an dem Ring-Körper 1 befestigt. Die von dem Ring-Körper 1 im Wesentlichen radial abstehenden freien Schenkel der Halte-Vorsprünge können dagegen von einem Benutzer der Schneidhilfe mit einer Hand ergriffen werden. Über die Halte-Vorsprünge kann der Ring-Körper 1 über einen gewissen Bereich in eine beliebige Größe per Hand zusammengedrückt werden, sodass hier quasi eine stufenlose Verstellung des Durchmessers D über einen gewissen Bereich möglich ist. Über die Halte-Vorsprünge kann aber auch beispielsweise ein Gummi gespannt werden, um einen gewünschten Durchmesser D des Ring-Körpers 1 zu erhalten. Der Ring-Körper 1 weist somit wieder ein erstes und ein zweites Spann-Ende 9, 10 auf, wobei an jedem Spann-Ende 9, 10 ein Halte-Vorsprung zur Größen-Verstellung des Ring-Körpers 1 vorgesehen ist.

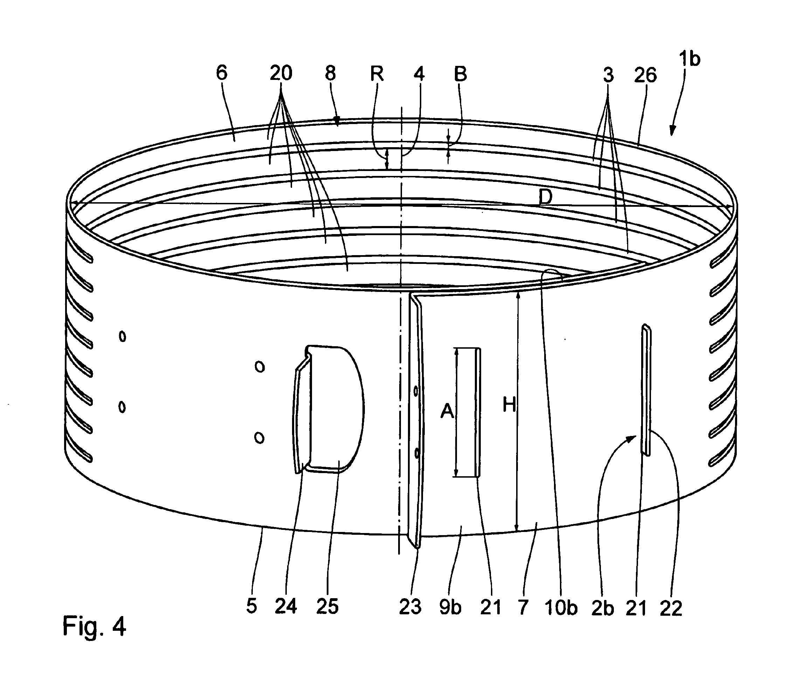

Nachfolgend wird unter Bezugnahme auf Fig. 4 eine bevorzugte Ausführungsform der Erfindung beschrieben. Identische Teile erhalten dieselben Bezugszeichen wie bei der ersten nicht erfinderischen Ausführungsform auf deren Beschreibung hiermit verwiesen wird. Konstruktiv unterschiedliche, jedoch funktionell gleichartige Teile bekommen dieselben Bezugszeichen mit einem nachgeordneten "b". Verglichen mit der ersten nicht erfinderischen Ausfuhrungsform ist bei der Ausführungsform der Erfindung gemäß Fig. 4 der-Spann-Verschluss zum Festlegen der Spann-Enden aneinander anders ausgestaltet. In dem ersten Spann-Ende 9b ist mindestens eine Halte-Ausnehmung 21 vorgesehen, die zur Aufnahme eines an dem zweiten Spann-Ende 10b vorgesehenen Halte-Vorsprungs 22 dient. Die mindestens eine Halte-Ausnehmung 21 und der Halte-Vorsprung 22 bilden zusammen einen Spann-Verschluss 2b zum sicheren Festlegen der Spann-Enden 9b, 10b aneinander.

Hier sind zwei identische Halte-Ausnehmungen 21 in dem ersten Spann-Ende 9b vorgesehen. Es können aber auch mehr als zwei Halte-Ausnehmungen 21, beispielsweise drei, vier, fünf usw., vorhanden sein. Die Halte-Ausnehmungen 21 sind schlitzartig ausgebildet und durchdringen den Ring-Körper 1b vollständig. Sie stellen somit eine durchgängige Verbindung zwischen der Innenwand 6 und der Außenwand 7 des Ring-Körpers 1b her. Die Halte-Ausnehmungen 21 erstrecken sich in dem Ring-Körper 1b in Richtung der Mittel-Längs-Achse 4 parallel zueinander. Sie sind folglich senkrecht zu der Umfangs-Richtung des Ring-Körpers 1b orientiert und sind in Umfangs-Richtung des Rings-Körpers 1b beabstandet zueinander angeordnet; sie haben somit unterschiedliche angulare Abstände zueinander und weisen auch unterschiedliche Abstände zu der benachbarten, abschließenden vertikalen Kante des Ring-Körpers 1b bzw. des Spann-Endes 9b auf. Die Halte-Ausnehmungen 21 haben jeweils eine axiale bzw. vertikale Höhe A, die zwischen 30% und 70%, vorzugsweise zwischen 40% und 60% der Höhe H des Ring-Körpers 1b liegt. Sie enden beabstandet zu dem unteren Fuß-Rand 5 und beabstandet zu dem dem Fuß-Rand 5 gegenüberliegenden Kopf-Rand 26 des Ring-Körpers 1b. Sie besitzen somit jeweils ein unteres und ein oberes Ende. Die Halte-Ausnehmungen 21 sind jeweils seitlich durch einen geschlossenen Begrenzungs-Rand des Ring-Körpers 1b begrenzt. Ihre konstante Breite in Umfangs-Richtung des-Ring-Körpers 1b entspricht in etwa der Dicke des Rings-Körpers 1b.

Ferner ist an dem Spann-Ende 9b ein radial nach außen vorspringender, endseitiger, erster Griff-Vorsprung 23 vorgesehen, der sich vorzugsweise über die gesamte Höhe H des Ring-Körpers 1b erstreckt. Der Griff-Vorsprung 23 ist durch im Wesentlichen rechtwinkliges Abkanten bzw. Umbiegen des freien Abschluss-Bereichs des Spann-Endes 9b entstanden. Alternativ kann der Griff-Vorsprung 23 aber auch separat ausgebildet sein.

Der Halte-Vorsprung 22 ist ein plattenartiger Halte-Steg, dessen Querschnitts-Abmessungen im Wesentlichen an die Abmessungen der Halte-Ausnehmungen 21 angepasst sind. Der Halte-Vorsprung 22 ist durch im Wesentlichen rechtwinkliges Abkanten bzw. Umbiegen eines sich an die abschließende, vertikale Kante des Spann-Endes 10b in Umfangs-Richtung anschließenden Ansatzes gebildet. Die axiale bzw. vertikale Höhe des Ansatzes ist kleiner als die eigentliche Höhe H des Ring-Körpers 1b. Der Ansatz befindet sich in etwa auf halber Höhe des Ring-Körpers 1b.

Ferner ist an dem zweiten Spann-Ende 10b ein zweiter Griff-Vorsprung 24 vorgesehen, der aus dem eigentlichen Ring-Körper 1b um etwa 90° nach außen gebogen worden ist. Dadurch schließt sich an den Griff-Vorsprung 24 ein umfangsseitig geschlossenes Fenster 25 an, dessen Abmessungen den Abmessungen des Griff-Vorsprungs 24 entsprechen. Der Griff-Vorsprung 24 erstreckt sich in Richtung der Mittel-Längs-Achse 4. Seine Enden sind beabstandet zu dem Fuß-Rand 5 und zu dem Kopf-Rand 26 angeordnet.

Nachfolgend wird die Handhabung der Schneidhilfe gemäß Fig. 4 kurz beschrieben. Prinzipiell ist die Schneidhilfe gemäß Fig. 4 entsprechend der Schneidhilfe gemäß der nicht erfinderischen ersten Ausführungsform zu handhaben. Auf die entsprechende vorherige Ausführung wird verwiesen. Zum Festlegen der Spann-Enden 9b, 10b aneinander ist der Halte-Vorsprung 22 von der Innenwand 6 aus in eine Halte-Ausnehmung 21 einzuführen. Der Halte-Vorsprung 22 ist soweit durch die Halte-Ausnehmung 21 zu führen bis die Außenwand 7 des zweiten Spann-Endes 10b innen an der Innenwand 6 des ersten Spann-Endes 9b anliegt, wodurch die Einführ-Bewegung des Halte-Vorsprungs 22 begrenzt wird. Gemäß der in Fig. 4 dargestellten EndPosition des Halte-Vorsprungs 22 durchsetzt der Halte-Vorsprung 22 die entsprechende Halte-Ausnehmung 21 vollständig und steht auch noch gegenüber der Außenwand 7 des Spann-Endes 9b nach außen hervor. Durch den formschlüssigen Eingriff zwischen dem Halte-Vorsprung 22 und der entsprechenden Halte-Ausnehmung 21 sind die Spann-Enden 9b, 10b sowohl in Umfangs-Richtung des Ring-Körpers 1b als auch quer zu dieser zueinander fixiert. Eine Relativ-Bewegung ist somit weder in Richtung der Mittel-Längs-Achse 4 noch in Umfangs-Richtung des Ring-Körpers 1b möglich. Durch die Reibung des Halte-Vorsprungs 22 in der Halte-Ausnehmung 21 bzw. durch die Anlage zwischen dem Halte-Vorsprung 22 und dem die Halte-Ausnehmung 21 begrenzenden Begrenzungs-Rand des Ring-Körpers 1b ist der Halte-Vorsprung 22 und somit auch das Spann-Ende 10b auch in radialer Richtung bzw. nach innen an dem Spann-Ende 9b fixiert. Nachdem der Ring-Körper 1b in seiner geschlossenen Stellung eine gewisse Spannung aufweist, wird der Halte-Vorsprung 22 fest gegen den Begrenzungs-Rand der Halte-Ausnehmung 21 gedrückt. Der Halte-Vorsprung 22 ist nur durch Aufbringung einer manuellen Kraft wieder aus der Halte-Ausnehmung 21 bewegbar. Der Halte-Vorsprung 22 ist im Wesentlichen nicht manuell umbiegbar. Er weist eine hohe Steifigkeit zu dem eigentliehen Ring-Körper 1b auf.

Durch die Wahl der Halte-Ausnehmung 21 erfolgt eine Größen-Einstellung der Schneidhilfe. Wenn der Halte-Vorsprung 22 die zu dem Griff-Vorsprung 23 benachbarte Halte-Ausnehmung 21 durchsetzt, ist der Durchmesser D des Ring-Körpers 1b größer, als wenn der Halte-Vorsprung 22 die zum dem Griff-Vorsprung 23 beabstandete Halte-Ausnehmung 21 durchdringt. Der Durchmesser-Unterschied kann etwa 2 cm betragen. Beispielsweise kann der Durchmesser D durch Wahl der entsprechenden Halte-Ausnehmung 21 auf etwa 26 cm und etwa 28 cm eingestellt werden.

Zum Einführen des Halte-Vorsprungs 22 in die entsprechende Halte-Ausnehmung 21 ist der Ring-Körper 1b an den Griff-Vorsprüngen 23, 24 zu greifen, die eine gute Ausrichtung des Halte-Vorsprungs 22 zu der entsprechenden Halte-Ausnehmung 21 ermöglichen. Die Griff-Vorsprünge 23, 24 wurden durch maschinelle Aufbringung einer sehr großen Biegekraft umgebogen. Sie sind im Wesentlichen nicht manuell zu dem eigentlichen Ring-Körper 1b umbiegbar und weisen eine sehr hohe Steifigkeit zu dem eigentlichen Ring-Körper 1b auf.

Die Ausführungsform gemäß Fig. 4 zeichnet sich durch ihre äußerst einfache Herstellung aus. Die Schneidhilfe gemäß Fig. 4 ist einstückig ausgebildet. Separate Verschlüsse sind nicht vorgesehen.

Mit der Schneidhilfe können Ungeübte einfach dünne Kuchenscheiben schneiden, die beispielsweise zur Herstellung einer Prinzregententorte verwendet werden können. Eine Prinzregententorte umfasst mindestens sechs dünnen Böden und Schokoladenbuttercreme.

## Patentansprüche

1. Schneidhilfe zum Erleichtern des Schneidens von Kuchen mit einem Ring-Körper ( 1 b), wobei der Ring-Körper (1b)
a) einen Kuchen-Aufnahmeraum (8) zur Aufnahme eines zu schneidenden Kuchens radial begrenzt,
b) eine Innenwand (6) zur mindestens teilweisen Anlage an dem Rand des zu schneidenden Kuchens aufweist, und
c) mindestens eine Führungs-Öffnung (3) zur Führung eines Schneidgeräts zum Schneiden des Kuchens aufweist,
**dadurch gekennzeichnet, dass**
d) der Ring-Körper (1b) ein erstes Spann-Ende (9b) und ein zweites Spann-Ende (10b) aufweist, wobei in dem ersten Spann-Ende (9b) mindestens eine Halte-Ausnehmung (21) und an dem zweiten Spann-Ende (10b) ein Halte-Vorsprung (22) zum arretierenden Eingreifen in die mindestens eine Halte-Ausnehmung (21) vorgesehen ist, wobei die mindestens eine Halte-Ausnehmung (21) schlitzartig ausgebildet ist, während der Halte-Vorsprung (22) als plattenartiger Halte-Steg ausgebildet ist.

2. Schneidhilfe nach Anspruch 1, **dadurch gekennzeichnet, dass** die mindestens eine Führungs-Öffnung (3) schlitzartig ausgebildet ist, wobei vorzugsweise die mindestens eine Führungs-Öffnung (3) eine Breite B von 6 mm bis 10 mm, am bevorzugtesten von 8 mm, aufweist.

3. Schneidhilfe nach Anspruch 1 oder 2, **dadurch gekennzeichnet, dass** sich die mindestens eine Führungs-Öffnung (3) über einen Winkelbereich von 100° bis 350°, vorzugsweise von 150° bis 250°, in dem Ring-Körper ( 1 b) erstreckt.

4. Schneidhilfe nach einem der vorherigen Ansprüche, **dadurch gekennzeichnet, dass** der Ring-Körper (1b) die Form eines Zylindermantels aufweist.

5. Schneidhilfe nach einem der vorherigen Ansprüche, **dadurch gekennzeichnet, dass** die mindestens eine Führungs-Öffnung (3) im Wesentlichen senkrecht zu einer Mittel-Längs-Achse (4) des Ring-Körpers (1b) verläuft.

6. Schneidhilfe nach einem der vorherigen Ansprüche, **dadurch gekennzeichnet, dass** die Innenwand (6) in Richtung der Mittel-Längs-Achse (4) des Ring-Körpers (1b) verläuft.

7. Schneidhilfe nach einem der vorherigen Ansprüche, **dadurch gekennzeichnet, dass** die Innenwand (6) zur Anlage über mindestens den halben Umfang des Kuchens, vorzugsweise über im Wesentlichen den gesamten Umfang des Kuchens, vorgesehen ist.

8. Schneidhilfe nach einem der vorherigen Ansprüche, **dadurch gekennzeichnet, dass** der Ring-Körper (1b) eine Höhe H von 3 cm bis 20 cm, vorzugsweise von 5 cm bis 10 cm, aufweist.

9. Schneidhilfe nach einem der vorherigen Ansprüche, **dadurch gekennzeichnet, dass** der Ring-Körper (1b) mindestens zwei Führungs-Öffnungen (3) aufweist, die übereinander angeordnet sind.

10. Schneidhilfe nach Anspruch 9, **dadurch gekennzeichnet, dass** der Ring-Körper (1b) mindestens drei Führungs-Öffnungen (3) aufweist, die einen identischen Abstand R zueinander haben, wobei vorzugsweise der Abstand R 6 mm bis 10 mm, am bevorzugtesten 8 mm, beträgt.

11. Schneidhilfe nach einem der vorherigen Ansprüche, **dadurch gekennzeichnet, dass** an dem ersten Spann-Ende (9b) ein erster Griff-Vorsprung (23) vorgesehen ist, wobei vorzugsweise an dem zweiten Spann-Ende (10b) ein zweiter Griff-Vorsprung (24) vorgesehen ist.

## Claims

1. Cutting aid for facilitating the cutting of cake, having a ring body (1), whereby the ring body (1)
a) radially limits a cake-accommodating space (8) for receiving a cake to be cut,
b) exhibits an inner wall (6) for at least partially abutting against the edge of the cake to be cut, and
c) exhibits at least one guide aperture (3) for guiding a cutting apparatus for cutting the cake,
**characterized in that**
d) the ring body (1b) exhibits a first tensioning end (9b) and a second tensioning end (10b), wherein a holding receptacle (21) is provided in the first tensioning end (9b) and a holding projection (22) is provided at the second tensioning end (10b) for the locking engagement with the at least one holding receptacle (21), wherein the at least one holding receptacle (21) is configured slot-like whereas the holding projection (22) is configured as a plate-like holding bar.

2. Cutting aid according to claim 1, **characterized in that** the at least one guide aperture (3) has a slot-type design, wherein the at least one guide aperture (3) preferably exhibits a width B of 6 mm to 10 mm, more preferably of 8 mm.

3. Cutting aid according to claim 1 or 2, wherein the at least one guide aperture (3) extends over an angle range stretching from 100° to 350°, preferably from 150° to 250°, in the ring body (1b).

4. Cutting aid according to any of the preceding claims, **characterized in that** the ring body (1b) has the shape of a cylinder jacket.

5. Cutting aid according to any of the preceding claims, **characterized in that** the at least one guide aperture (3) runs essentially vertically to a central longitudinal axis (4) of the ring body (1b).

6. Cutting aid according to any of the preceding claims, **characterized in that** the inner wall (6) runs in the direction of the central longitudinal axis (4) of the ring body (1b).

7. Cutting aid according to any of the preceding claims, **characterized in that** the inner wall (6) is envisaged to abut over at least half the circumference of the cake, preferably over essentially the entire circumference of the cake.

8. Cutting aid according to any of the preceding claims, **characterized in that** the ring body (1b) exhibits a height H of 3 cm to 20 cm, preferably of 5 cm to 10 cm.

9. Cutting aid according to any of the preceding claims, **characterized in that** the ring body (1b) exhibits at least two guide apertures (3), which are arranged above each other.

10. Cutting aid according to claim 10, **characterized in that** the ring body (1b) exhibits at least three guide apertures (3), which have an identical distance R to each other, wherein the distance R is preferably 6 mm to 10 mm, more preferably 8 mm.

11. Cutting aid according to any of the preceding claims, **characterized in that** a first retaining projection (23) is provided at the first tensioning end (9b), wherein preferably a second retaining projection (24) is provided at the second tensioning end (10b).

## Revendications

1. Aide à la découpe afin de faciliter la découpe de gâteaux comprenant un corps circulaire (1b), le corps circulaire (1b)
a) limitant radialement un espace de réception du gâteau (8) pour la réception d'un gâteau à découper,
b) présentant une paroi interne (6) pour une installation au moins partielle sur le bord du gâteau à découper, et
c) présentant au moins une ouverture de guidage (3) pour le passage d'un outil de découpe pour la découpe du gâteau,
**caractérisée en ce que**
d) le corps circulaire (1b) présente une première extrémité de serrage (9b) et une seconde extrémité de serrage (10b), où au moins un évidement pour le maintien (21) est prévu au niveau de la première extrémité de serrage (9b) et une avancée de maintien (22) est prévue à la seconde extrémité de serrage (10b) pour un ancrage bloquant dans au moins un évidement de maintien (21), tandis que l'avancée de maintien (22) est conçue sous la forme d'une barrette de maintien en forme de plateau.

2. Aide à la découpe selon la revendication 1 **caractérisée en ce qu'**au moins une ouverture de guidage (3) est conçue sous la forme d'une fente, où, au moins, l'ouverture de guidage (3) présente de préférence une largeur de 6 mm à 10 mm, de manière particulièrement préférée une largeur de 8 mm.

3. Aide à la découpe selon les revendications 1 ou 2 **caractérisée en ce qu'**au moins l'ouverture de guidage (3) s'étend sur un domaine angulaire de 100 ° à 350 °, de préférence de 150 °à 250 ° dans le corps circulaire (1b).

4. Aide à la découpe selon l'une des revendications précédentes **caractérisée en ce que** le corps circulaire (1b) présente la forme d'un corps de cylindre.

5. Aide à la découpe selon l'une des revendications précédentes **caractérisée en ce qu'**au moins une ouverture de guidage (3) s'étend dans l'ensemble verticalement par rapport à un axe central longitudinal (4) du corps circulaire (1b).

6. Aide à la découpe selon l'une des revendications précédentes **caractérisée en ce que** la paroi interne (6) s'étend dans la direction de l'axe central longitudinal (4) du corps circulaire (1b).

7. Aide à la découpe selon l'une des revendications précédentes **caractérisée en ce que** la paroi interne (6) est prévue pour l'installation sur au moins la moitié du périmètre du gâteau, de préférence dans l'ensemble sur la totalité du périmètre du gâteau.

8. Aide à la découpe selon l'une des revendications précédentes **caractérisée en ce que** le corps circulaire (1b) présente une hauteur H de 3 cm à 20 cm, de préférence de 5 cm à 10 cm.

9. Aide à la découpe selon l'une des revendications précédentes **caractérisée en ce** le corps circulaire (1b) présente au moins deux ouvertures de guidage (3) qui sont disposées l'une au dessus de l'autre.

10. Aide à la découpe selon la revendication 9 **caractérisée en ce que** le corps circulaire (1b) présente au moins trois ouvertures de guidage (3) qui ont un espace R identique entre elles, l'espace R se situant de préférence entre 6 mm et 10 mm, se situant de manière particulièrement préférée à 8 mm.

11. Aide à la découpe selon l'une des revendications précédentes **caractérisée en ce qu'**une première avancée d'ancrage (23) est prévue sur la première extrémité de serrage (9b), une seconde avancée d'ancrage (24) étant de préférence prévue sur la seconde extrémité de serrage (10b).
